# FASCICULE DE BREVET EUROPEEN

(11) **EP 2 749 390 B1**
(45) Date de publication et mention de la délivrance du brevet: **24.08.2022**
(21) Numéro de dépôt: 13199717.3
(22) Date de dépôt: 27.12.2013
(51) Int. Cl.: B60R 13/02, B29C 45/14, B32B 1/00, B32B 3/26, B32B 21/04, B29C 37/00, B29L 31/00

(54) **Elément de garnissage comprenant un élément de décor entouré au moins en partie par un film en matériau plastique et son procédé de réalisation**
Einsatzelement, das ein Dekorelement umfasst, das mindestens teilweise mit einer Plastikfolie überzogen ist, und Verfahren zu seiner Herstellung
Trim element including a decorative element at least partially surrounded by a film of plastic material and its manufacturing process

(30) Priorité: 27.12.2012 FR 1262862
(43) Date de publication de la demande: 02.07.2014
(60) Demande divisionnaire: 22183628.1
(73) Titulaire: FAURECIA INTERIEUR INDUSTRIE, 92000 Nanterre (FR)
(72) Inventeur: Beau, Godefroy, 92250 LA GARENNE COLOMBES (FR); Talleux, Eric, 60430 SAINT SULPICE (FR); Durand, Nathalie, 01500 AMBERIEU EN BUGEY (FR)
(74) Mandataire: Lavoix

(56) Documents cités:
- EP-A1- 0 786 380
- WO-A1-2010/113626

## Description

La présente invention concerne un élément de garnissage de véhicule, du type comprenant au moins un élément de décor réalisé en un premier matériau, ledit élément de décor comprenant une face externe formant une partie de la face visible de l'élément de garnissage et une face interne, ledit élément de décor étant agencé sur un film en matériau plastique, différent du premier matériau, ledit film comprenant au moins une zone d'envers, s'étendant sur la face interne de l'élément de décor, ledit film étant agencé au moins en partie sur un substrat.

La présente invention concerne également un procédé de réalisation d'un tel élément de garnissage.

Il est connu de produire des éléments de garnissage, par exemple des panneaux de porte, des garnissages de planches de bord ou autre, comprenant un élément de décor présentant un aspect particulier, par exemple un médaillon, une baguette de décor ou une plaque de décor.

De tels éléments de garnissage sont généralement réalisés par injection du substrat, ou élément de support, sur l'envers de l'élément de décor dans une cavité d'injection. Cependant, la mise en oeuvre d'un tel procédé est compliquée car il est nécessaire de positionner précisément l'élément de décor dans la cavité d'injection et d'immobiliser celui-ci afin d'obtenir un élément de garnissage avec un élément de décor disposé à l'endroit voulu. Le positionnement et le maintien d'un élément de décor à un emplacement précis de la cavité d'injection sont des opérations compliquées lorsqu'elles sont répétées pour produire plusieurs éléments de garnissage identiques. Ces opérations sont encore plus compliquées lorsque deux éléments de décor distincts et espacés l'un de l'autre sont prévus sur un élément de garnissage.

En outre, il peut y avoir des défauts d'aspect dans la zone de transition entre l'élément de décor et le substrat entourant l'élément de décor et formant une partie de la face visible de l'élément de garnissage. De tels défauts peuvent également être présents lorsque l'élément de décor est percé et qu'il convient d'éviter que le matériau injecté pour former le substrat ne s'infiltre par l'ouverture formée dans l'élément de décor.

L'un des buts de l'invention est de palier ces inconvénients en proposant un élément de garnissage comprenant un élément de décor réalisable à l'identique de façon simple et sans générer de défauts d'aspect.

A cet effet, l'invention concerne un élément de garnissage selon la revendication 1.

La présence de la zone périphérique du film plastique permet d'améliorer l'aspect de la transition entre l'élément de décor et le reste de l'élément de garnissage du côté de la face visible de l'élément de garnissage. En outre, cette zone périphérique peut être utilisée pour positionner et maintenir de façon précise l'élément de décor dans une cavité d'injection. Ainsi, l'élément de garnissage peut être reproduit à l'identique de façon simple et en garantissant l'absence de défauts d'aspect sur sa face visible.

Selon d'autres caractéristiques de l'élément de garnissage selon l'invention :
- l'élément de décor est formé par un complexe ligneux, comprenant au moins une couche de matériau ligneux et une couche de renfort, ladite couche de renfort s'étendant sur l'envers de la couche de matériau ligneux et formant la face interne de l'élément de décor ;
- la zone périphérique du film s'étend sensiblement dans la continuité de la face externe de l'élément de décor ;
- la zone périphérique du film s'étendant dans l'ouverture obture ladite ouverture ou ne recouvre que les bords de ladite ouverture ;
- l'élément de garnissage comprend au moins deux éléments de décor distincts espacés l'un de l'autre, le film comprenant deux zones d'envers, s'étendant chacune sur la face interne de l'un des éléments de décor, et au moins une zone périphérique s'étendant d'un élément de décor à l'autre et formant la face visible de l'élément de garnissage entre lesdits éléments de décor ; et
- au moins la partie périphérique du film est soumise à un traitement de surface de sorte à modifier son aspect.

L'invention concerne également un procédé de réalisation d'un élément de garnissage tel que décrit ci-dessus, selon la revendication 7, ce procédé comprenant les étapes suivantes :
- placer au moins un élément de décor sur une paroi d'un outil de formage, la face externe dudit élément étant appliquée contre ladite paroi,
- appliquer la zone d'envers du film en matériau plastique sur la face interne de l'élément de décor et la zone périphérique contre la paroi de l'outil de formage de sorte que ladite zone entoure au moins une partie de l'élément de décor et s'étende dans au moins une ouverture traversant l'élément de décor, ledit film étant fixé à l'élément de décor lors de cette opération,
- former le substrat sur la face interne du film en matériau plastique, sur la face dudit film opposée à la zone d'envers et à la zone périphérique.

Selon d'autres caractéristiques du procédé de réalisation selon l'invention :
- au moins deux éléments de décor sont placés sur la paroi de l'outil de formage espacés l'un de l'autre, le film étant appliqué sur les faces internes desdits deux éléments de décor et la zone périphérique dudit film étant appliqué contre ladite paroi au moins entre lesdits éléments de décor ;
- l'ensemble élément de décor / film en matériau plastique est placé dans un outil d'injection après l'assemblage de l'élément de décor et du film, le substrat étant injecté sur ledit film dans ledit outil d'injection.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un exemple d'élément de garnissage selon l'invention,
- la Fig. 2 est une représentation schématique en perspective et en coupe de l'élément de garnissage de la Fig. 1, la coupe étant réalisée selon le plan II-II de la Fig. 1,
- la Fig. 3 est une représentation schématique en coupe de l'élément de garnissage selon le plan II-II de la Fig. 1,
- la Fig. 4 est une représentation schématique en coupe d'un autre exemple d'élément de garnissage selon l'invention, dans lequel l'élément de décor comprend une ouverture traversante,
- la Fig. 5 est une représentation schématique de face d'un élément de décor prévu pour réaliser l'élément de garnissage de la Fig. 1,
- la Fig. 6 est une représentation schématique des différentes étapes d'assemblage de deux éléments de décor avec le film en matériau plastique,
- la Fig. 7 est une représentation schématique en coupe des éléments de décor assemblés avec le film en matériau plastique à l'issu des étapes représentées sur la Fig. 6, et
- la Fig. 8 est une représentation schématique en coupe de l'étape de réalisation du substrat sur l'assemblage de la Fig. 7.

Dans la description, les termes « interne » et « externe » sont définis par rapport à l'orientation de l'élément de garnissage lorsqu'il est disposé dans un véhicule, le terme « interne » désignant ce qui est destiné à être tourné vers la caisse du véhicule et à n'être pas visible des occupants du véhicule et le terme « externe » désignant ce qui est destiné à être vers l'intérieur de l'habitacle du véhicule. Le terme « endroit » désigne le côté d'un élément tourné vers l'extérieur et le terme « envers » désigne le côté d'un élément tourné vers l'intérieur.

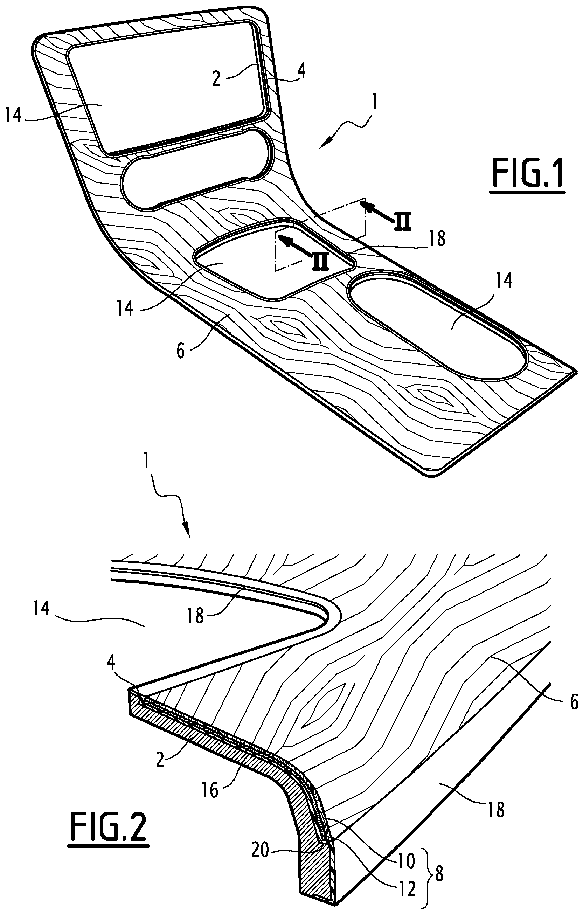

En référence aux Fig. 1 à 3, on décrit un élément de garnissage 1 comprenant, de l'intérieur vers l'extérieur, un substrat 2, ou élément de support, un film en matériau plastique 4, recouvrant, partiellement ou totalement, la surface externe du substrat 2, et au moins un élément de décor 6, disposé sur une partie de la surface externe du film en matériau plastique 4, et réalisé en au moins un premier matériau différent du film en matériau plastique 4.

On notera que la forme de l'élément de garnissage des Fig. 1 à 3 est uniquement un exemple de réalisation nullement limitatif et que toute autre forme peut bien entendu être envisagée.

L'élément de décor 6 est par exemple formé par un complexe ligneux 8, comprenant au moins, de l'extérieur vers l'intérieur, une couche de matériau ligneux 10 et une couche de renfort 12, s'étendant sur l'envers de la couche de matériau ligneux 10 et formant la face interne de l'élément de décor 6. En option, l'élément de décor comprend un revêtement de protection 13 recouvrant la couche de matériau ligneux 10 sur son endroit, c'est-à-dire du côté de la face externe de la couche de matériau ligneux 10.

La couche de matériau ligneux 10 est par exemple formée par une couche de bois naturel ou une superposition de couches de bois. La couche de matériau ligneux 10 est suffisamment fine pour présenter une certaine souplesse et ainsi être apte à être mise en forme tridimensionnelle.

La couche de renfort 12 s'étend directement sur l'envers de la couche de matériau ligneux 10 et est formée par un matériau souple. Par souple, on entend que la couche de renfort 8 n'est pas rigide et peut être mise en forme.

Le matériau de la couche de renfort est par exemple un textile, tel qu'un tissé ou non-tissé ou du papier ou du carton ou bien encore un film plastique.

Le revêtement de protection 13 a pour fonction de protéger la couche de matériau ligneux 10, par exemple contre les rayonnements ultraviolets pouvant provoquer un vieillissement accéléré de la couche de matériau ligneux 10. Le revêtement de protection 13 est par exemple une résine de synthèse, tel qu'un vernis, par exemple un vernis à base de polyuréthane ou autre. Le revêtement de protection peut être coloré, translucide ou transparent.

La couche de matériau ligneux 10 et la couche de renfort 12 sont assemblées ensemble, par exemple par collage, et forment ainsi un complexe 8 souple qui peut être mis en forme pour former une partie d'un élément de garnissage. L'épaisseur totale du complexe 8 est par exemple comprise entre 0,3 mm et 3 mm. Le revêtement de protection 13 peut être ajouté sur la couche de matériau ligneux 10 par exemple par enduction, avant ou après son assemblage avec la couche de renfort 12 et ne modifie sensiblement pas les caractéristiques mécaniques du complexe 8 obtenu.

Selon un mode de réalisation, le complexe 8 présente une épaisseur totale comprise entre 0,7 et 0,8 mm et la couche de matériau ligneux une épaisseur comprise entre 0,3 et 0,4 mm.

Un tel élément de décor 6 permet de conférer un aspect « bois » à l'élément de garnissage, tout en ayant un élément de décor 6 assez malléable pour le conformer comme on le souhaite.

L'élément de décor 6 peut être de toute forme adaptée. Dans l'élément de garnissage fini, l'élément de décor 6 peut s'étendre selon trois dimensions. L'élément de décor peut notamment présenter des formes tridimensionnelles complexes. Il comprend des ouvertures traversantes 14, pour permettre le passage d'éléments fonctionnels du véhicule, par exemple lorsque l'élément de garnissage entoure ces éléments fonctionnels, comme c'est le cas pour une planche de bord, ou pour intégrer des motifs dans l'élément de décor, par exemple en prévoyant plusieurs ouvertures 14 de faibles dimensions dessinant un motif en matériau ligneux.

Il est entendu que d'autres types d'éléments de décor 6 peuvent être prévus, en utilisant d'autres matériaux ou en n'utilisant que du bois naturel, par exemple des baguettes en bois naturel ou en autre matériau.

Selon d'autres exemples, l'élément de décor peut être formé par un élément en cuir d'une épaisseur comprise entre 0,8 mm et 1,2 mm, d'un élément en aluminium d'une épaisseur comprise entre 0,6 mm et 1 mm, d'un élément en carbone d'une épaisseur comprise entre 0,5 mm et 1mm ou d'un élément de textile d'une épaisseur comprise entre 0,5 mm et 1 mm. D'une manière générale, des éléments de décor d'une épaisseur comprise entre 0,1 mm et 3 mm peuvent être utilisés. Bien entendu, plusieurs éléments de décor en matériaux différents peuvent être prévus.

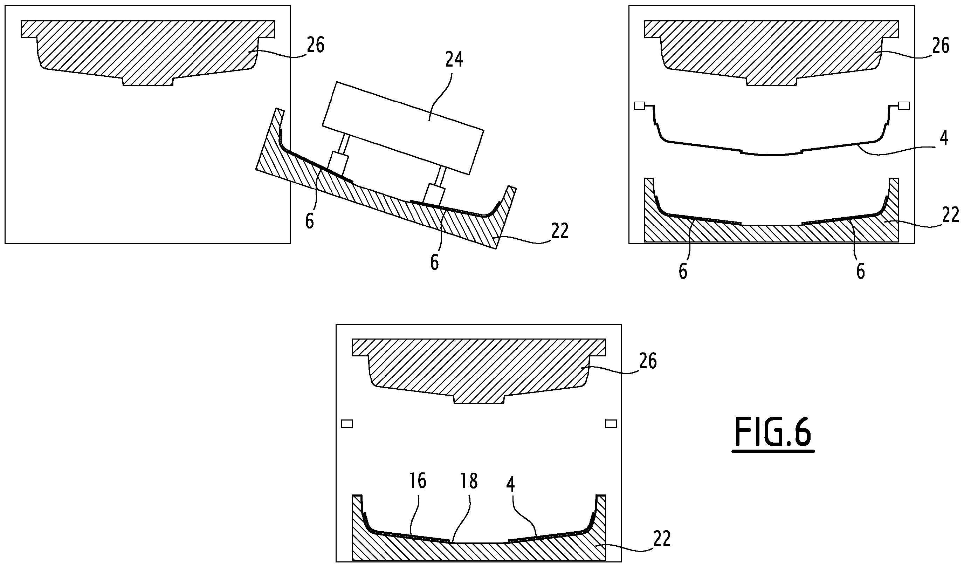

Selon le mode de réalisation représenté sur les Fig. 6 à 8, l'élément de garnissage 1 peut comprendre au moins deux éléments de décor 6, tels que décrits ci-dessus. Ces éléments de décor 6 sont distincts l'un de l'autre, c'est-à-dire qu'ils forment deux pièces séparées rapportées sur l'élément de garnissage 1, et par exemple disposés en deux zones différentes et espacées l'une de l'autre de l'élément de garnissage 1, la zone entre les éléments de décor 6 n'étant pas recouverte par un élément de décor 6.

Le film en matériau plastique 4 s'étendant sur l'envers de l'élément de décor 6 et recouvrant, au moins en partie, le substrat 2 est par exemple réalisé en polycarbonate (PC), acrylonitrile butadiène styrène (ABS), PC-ABS, polyméthacrylate de méthyle, (PMMA) ou un mélange de ces matériaux. Plus généralement, le film 4 est réalisé en un matériau différent de celui de l'élément de décor 6. Ce film 4 est fin et présente une épaisseur inférieure à celle de l'élément de décor 6. A titre d'exemple, le film présente une épaisseur comprise entre 0,275 mm et 0,750 mm. Généralement, l'épaisseur du film est voisine de 0,275 mm.

Le film 4 comprend une zone d'envers 16, formée par la partie du film 4 qui s'étend sur l'envers de l'élément de décor 6, et au moins une zone périphérique 18, formée par une partie du film 4 non recouverte par l'élément de décor 6.

La zone périphérique 18 forme une partie de la face visible de l'élément de garnissage 1, c'est-à-dire qu'elle s'étend à l'extérieur de l'élément de garnissage 1 et est visible depuis l'extérieur de cet élément de garnissage. La zone périphérique 18 s'étend dans la continuité de l'élément de décor 6, c'est-à-dire que la face visible de l'élément de décor 6 et la face visible de la zone périphérique 18 sont affleurantes et forment une face visible de l'élément de garnissage 1 continue. Ainsi, la zone périphérique 18 et la zone d'envers 16 sont reliées l'une à l'autre par un décrochement 20, correspondant à l'épaisseur de l'élément de décor 6, entourant la périphérie de l'élément de décor 6.

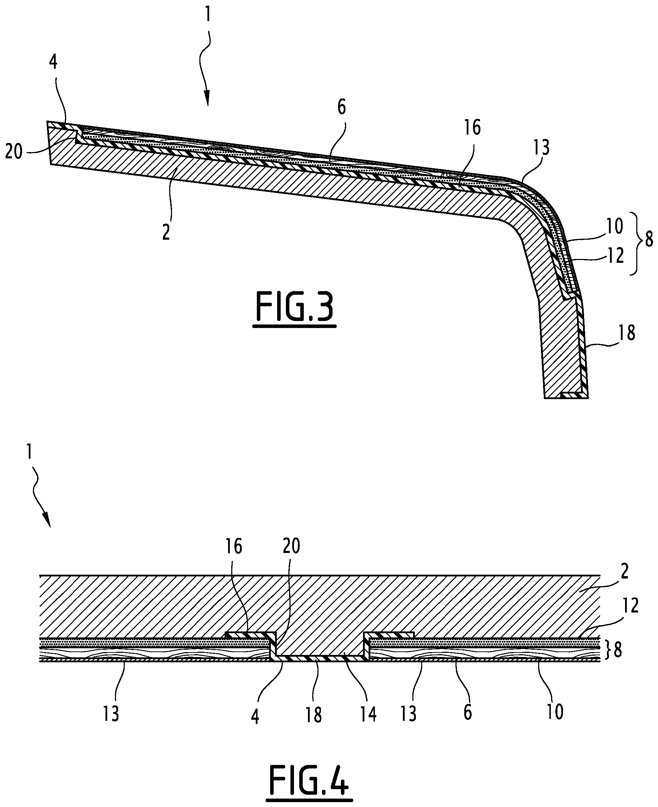

La zone périphérique 18 peut être utilisée pour former une bordure autour de l'élément de décor 6, comme représenté sur les Fig. 2 et 3. Une telle bordure présente une esthétique particulière, qui confère à la transition entre l'élément de décor 6 et le reste de l'élément de garnissage 1 un aspect satisfaisant, dépourvu de défaut d'aspect.

La zone périphérique 18 peut également former le bord d'une ouverture traversante 14 afin d'en améliorer l'aspect, comme représenté sur la Fig. 1 et 2.

Selon le mode de réalisation représenté sur la Fig. 4, la zone périphérique 18 peut s'étendre dans une ouverture 14 de sorte à obturer celle-ci. Un tel mode de réalisation est particulièrement avantageux lorsque l'ouverture 14 est de faible dimension et sert à définir un motif dans l'élément de décor 6. Un ensemble d'ouvertures dans l'élément de décor 6 permet ainsi avantageusement de crée un motif sur l'élément de décor. La zone périphérique 18 permet d'éviter que le substrat 2 s'étendant dans l'ouverture 14 ne « déborde » du côté de la face visible de l'élément de garnissage 1 en passant par la ou les ouvertures 14, comme cela sera décrit ultérieurement, et permet en outre d'améliorer l'esthétisme du motif en soulignant sa présence si l'on choisit un film en matériau plastique ayant un aspect particulier, comme cela va à présent être décrit.

En effet, au moins la zone périphérique 18 peut être agencée pour présenter un aspect particulier permettant d'améliorer l'aspect de l'élément de garnissage 1, étant donné que cette zone périphérique 18 est visible depuis l'extérieur de l'élément de garnissage 1. Ainsi, la zone périphérique 18 est utilisée, comme l'élément de décor 6, pour conférer un aspect particulier à l'élément de garnissage 1. A cet effet, le film de matériau plastique 4 peut être choisi d'une couleur particulière. En variante ou en combinaison, le film en matériau plastique 4 peut subir un traitement de surface, au moins du côté de la face externe de la zone périphérique 18. Par traitement de surface, on entend un traitement visant à modifier l'aspect du film en matériau plastique, tel qu'une impression sur la face visible du film, une opération de chromage, de vernissage, de coloration ou autre. Au moins la zone périphérique 18 peut également subir plusieurs traitements de surface différent afin d'avoir une zone périphérique 18 présentant un aspect variable selon la zone de l'élément de garnissage dans laquelle elle s'étend.

Avantageusement, le film en matériau plastique comprend une zone périphérique 18 entourant toute la périphérie de l'élément de décor 6. Il est cependant envisageable d'avoir une zone périphérique n'entourant qu'une partie de l'élément de décor 6.

Dans le cas où l'élément de garnissage 1 comprend plusieurs éléments de décor 6 distincts et espacés les uns des autres, le film en matériau plastique 4 comprend alors deux zones d'envers 16, chacune s'étendant sur la face interne de l'un des éléments de décor 6, et par exemple au moins une zone périphérique 18 s'étendant de l'un des éléments de décor 6 à l'autre. Cette zone périphérique 18 peut former la face visible de l'élément de garnissage 1 dans l'espace s'étendant entre les éléments de décor 6 ou être retirée après réalisation de l'élément de garnissage pour former une ouverture entre les éléments de décor 6.

Le substrat 2 est classique pour ce genre d'application. Il est réalisé en un matériau injectable dans un outil d'injection. Le substrat 2 est par exemple sensiblement rigide et permet de maintenir l'élément de décor 6 en forme et de rigidifier l'élément de garnissage 1.

Le substrat 2 par exemple réalisée en un matériau composite comprenant des fibres naturelles noyées dans un matériau plastique. Un tel matériau composite est connu sous la dénomination NFC (natural fibre composite en anglais, ou composite en fibres naturelles). Les fibres naturelles sont par exemples formées par des fibres de bois ou de lin ou autre. Les fibres de matériau plastique sont par exemple des fibres de polypropylène (PP) et/ou de polyéthylène téréphtalate (PET) et sont fondues en enrobant les fibres naturelles pour former un ensemble cohérant, dans lequel les fibres naturelles sont liées entre elles par le matériau plastique. En variante, le substrat 2 peut être un matériau plastique pur injectable par exemple, du PC, PC-ABS, du polyamide (PA), renforcé ou non par des fibres, notamment des fibres de verre.

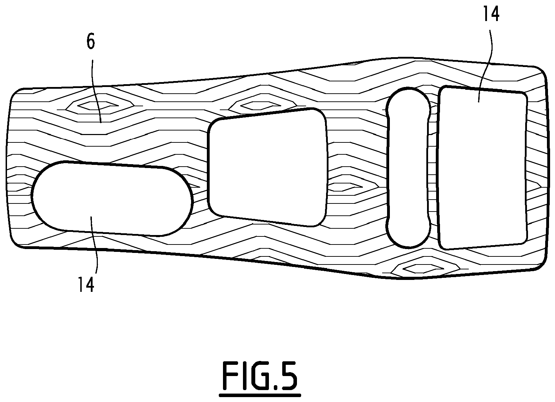

En référence aux Fig. 5 à 8, on décrit à présent un procédé de réalisation d'un élément de garnissage 1 tel que décrit ci-dessus.

Au cours d'une première étape, on forme l'élément de décor 6, en assemblant par exemple la couche de matériau ligneux 10 à la couche de renfort 12 de sorte à former le complexe 8 et en découpant ce complexe 8 selon le contour voulu, comme représenté sur la Fig. 5. Cette étape de découpe est par exemple réalisée au laser sur un complexe 8 sensiblement plan, c'est-à-dire avant sa mise en forme tridimensionnelle ultérieure. La découpe au laser 8 permet d'obtenir une découpe très précise de l'élément de décor 6, notamment pour la forme et la position des ouvertures traversantes 14. Une telle découpe au laser permet également de former des ouvertures de faibles dimensions permettant d'obtenir des motifs finement découpés dans l'élément de décor 6.

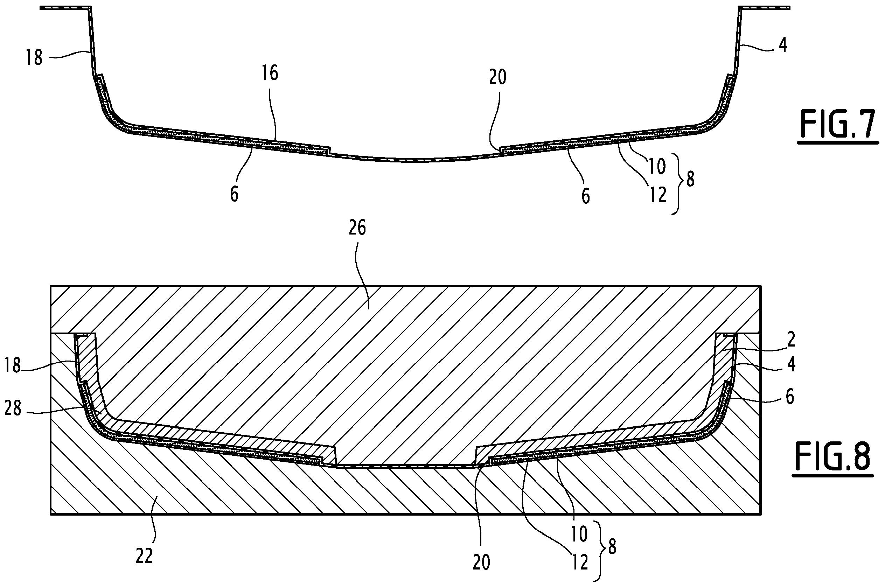

Au cours d'une deuxième étape, l'élément de décor 6 est placé dans une première partie 22 d'un outil de formage, par exemple au moyen d'un manipulateur 24 apte à prélever un élément de décor 6 et à le positionner dans la première partie 22 de l'outil de formage (schéma à gauche de la Fig. 6). La première partie 22 peut par exemple être mobile pour être placée face à un opérateur manoeuvrant le manipulateur 24 lors du chargement et déchargement de l'élément de décor et pour être disposée sous une deuxième partie 26 de l'outil lors du fonctionnement de l'outil de formage. Selon le mode de réalisation représenté sur la Fig. 6, deux éléments de décor 6 sont placés simultanément contre la première partie 22 de l'outil de formage. La face externe des éléments de décor 6 est appliquée contre la paroi de la première partie 22 de sorte que la face interne des éléments de décor 6 est tournée vers la deuxième partie 26 de l'outil. Ensuite, la première partie 22 est replacée sous la deuxième partie 26 de l'outil et le film en matériau plastique 4, préalablement mis en forme par exemple par thermoformage, est interposé entre ces parties (schéma à droite de la Fig. 6). La deuxième partie 26 est alors rapprochée de la deuxième partie 22 de sorte à appliquer le film 4 contre l'envers, ou face interne, des éléments de décor 6 et à assembler, par exemple par thermocompression ou par collage, les éléments de décor 6 sur la face externe du film de matériau plastique (figure du bas de la Fig. 6 et Fig. 7). Au cours de cette étape d'assemblage, les éléments de décor 6 et le film en matériau plastique 4 sont également formés pour obtenir sensiblement la forme tridimensionnelle qu'ils auront sur l'élément de garnissage 1 fini.

Selon un mode de réalisation, le film 4 est thermoformé directement sur les éléments de décor 6, dont la face interne a été préalablement encollée avec une colle réactivable à chaud par exemple. Un tel procédé est par exemple décrit dans le document WO2011089359. Ce procédé permet avantageusement d'obtenir une finition supérieure dans la zone de raccord entre l'élément de décor 6 et le film 4.

L'ensemble éléments de décor 6 / film 4 est ensuite disposé dans une cavité d'injection 28 (Fig. 8) en plaçant la face visible des éléments de décor 6 et la face visible de la zone périphérique 18 du film 6 contre une paroi de cette cavité, présentant la forme de l'élément de garnissage 1 à obtenir. Le substrat 2 est injecté dans la cavité d'injection sur l'envers, ou face interne, du film en matériau plastique 4, c'est-à-dire sur la face du film opposée à la zone d'envers 16 et à la zone périphérique 18.

On notera que la cavité d'injection 28 peut être formée par l'outil de formage utilisé pour assembler les éléments de décor 6 au film en matériau plastique 4 en ajustant simplement la distance séparant la première partie 22 de la deuxième partie 26 de l'outil de façon à laisser un espace à remplir par le matériau d'injection formant le substrat 2.

Le film en matériau plastique 4 permet de maintenir les éléments de décor 6 dans la cavité d'injection 28 sans risque de mauvais positionnement de ces éléments les uns par rapport aux autres et par rapport au substrat 2. En effet, le film en matériau plastique 4 « fixe » la position des éléments de décor 6 sur la paroi de la cavité d'injection une fois qu'il est appliqué contre ces éléments de décor 6. En outre, le film en matériau plastique 4 évite l'infiltration du matériau d'injection formant le substrat 2 dans les ouvertures traversantes 14 et évite surtout que ce matériau passe du côté de la face visible de l'élément de garnissage 1.

On peut envisager de laisser une partie de film en matériau plastique au-delà d'une zone périphérique 18 entourant un élément de décor 6, cette partie en surplus pouvant servir de moyen de maintien de l'ensemble éléments de décor 6 / film 4 dans une cavité d'injection et pouvant être découpée après l'injection du matériau formant le substrat.

L'élément de garnissage 1 décrit ci-dessus est reproductible à l'identique sans risque de différence de positionnement des éléments de décor 6 d'un élément de garnissage à l'autre. En outre, la bordure des éléments de décor 6 peut présenter un aspect favorable grâce à la zone périphérique 18 du film en matériau plastique. Ce film facilite la réalisation de l'élément de garnissage, notamment lorsqu'il comprend plusieurs éléments de décor 6.

La zone périphérique 18 permet en outre de masquer d'éventuels défauts d'aspect dans le substrat 2 (par exemple des lignes de recollement) et/ou d'utiliser des matériaux moins nobles pour réaliser le substrat, car celui-ci est protégé par la zone périphérique du film et n'est donc pas soumis aux rayures, au rayonnement UV, etc. En outre, l'aspect du substrat 2 n'a pas à être particulièrement esthétique, même dans les zones visibles du substrat, car l'aspect extérieur de l'élément de garnissage dans ces zones est conféré par la zone périphérique 18 du film 4. Ainsi, des matériaux (par exemple l'ABS) ne permettant pas normalement d'avoir un aspect satisfaisant peuvent être utilisés pour former le substrat 2.

Le procédé selon l'invention permet de former des éléments de garnissage ayant des formes complexes, comprenant par exemple des portions en creux et/ou en relief, présentant des bords ayant un étirement local supérieur à 5%. Dans ce cas, les zones présentant un étirement important peuvent être couvertes avec le film 4, tandis que les zones adaptées sont couvertes par un ou plusieurs éléments de décor 6. Les procédés classiques ne permettent pas d'obtenir ce type de pièces revêtues par un ou plusieurs éléments de décor tels que décrits ci-dessus.

Du fait des matériaux naturels employés pour les éléments de décor et des formes tridimensionnelles de ces éléments, l'épaisseur de ces éléments est supérieure à celle du film 4. En utilisant un tel film, il est possible de prévoir des éléments de décor ayant des épaisseurs supérieures à celles de simples éléments de décor thermoformés et d'accroître les possibilités dans le choix des formes tridimensionnelles de l'élément de décor, qui peuvent être rendues plus complexes, et présenter par exemple des reliefs et des creux ou autre. Comme indiqué ci-dessus, la présence du film permet de faciliter le positionnement et le maintien de l'élément de décor lors de la réalisation de l'élément de garnissage et d'éviter des étapes de reprise de la pièce obtenue, telle que des étapes de découpe ou autre.

## Revendications

1. Elément de garnissage (1) de véhicule comprenant au moins un élément de décor (6) réalisé en un premier matériau, ledit élément de décor (6) comprenant une face externe formant une partie de la face visible de l'élément de garnissage (1) et une face interne, ledit élément de décor (6) étant agencé sur un film en matériau plastique (4), différent du premier matériau, ledit film (4) comprenant au moins une zone d'envers (16), s'étendant sur la face interne de l'élément de décor (6), ledit film étant agencé au moins en partie sur un substrat (2), le film (4) comprenant en outre au moins une zone périphérique (18) s'étendant autour d'au moins une partie de l'élément de décor (6) et formant une autre partie de la face visible de l'élément de garnissage (1), **caractérisé en ce que** l'élément de décor (6) comprend au moins une ouverture (14) traversant ledit élément, une zone périphérique (18) du film s'étendant dans ladite ouverture (14) et formant la face visible de l'élément de garnissage dans ladite ouverture (14).

2. Elément de garnissage selon la revendication 1, **caractérisé en ce que** l'élément de décor (6) est formé par un complexe ligneux (8), comprenant au moins une couche de matériau ligneux (10) et une couche de renfort (12), ladite couche de renfort (12) s'étendant sur l'envers de la couche de matériau ligneux (10) et formant la face interne de l'élément de décor (6).

3. Elément de garnissage selon la revendication 1 ou 2, **caractérisé en ce que** la zone périphérique (18) du film (4) s'étend sensiblement dans la continuité de la face externe de l'élément de décor (6).

4. Elément de garnissage selon l'une quelconque des revendications 1 à 3, **caractérisé en ce que** la zone périphérique (18) du film s'étendant dans l'ouverture (14) obture ladite ouverture (14) ou ne recouvre que les bords de ladite ouverture (14).

5. Elément de garnissage selon l'une quelconque des revendications 1 à 4, **caractérisé en ce qu'**il comprend au moins deux éléments de décor (6) distincts espacés l'un de l'autre, le film comprenant deux zones d'envers (16), s'étendant chacune sur la face interne de l'un des éléments de décor (6), et au moins une zone périphérique (18) s'étendant d'un élément de décor (6) à l'autre et formant la face visible de l'élément de garnissage entre lesdits éléments de décor (6).

6. Elément de garnissage selon l'une quelconque des revendications 1 à 5, **caractérisé en ce que** au moins la partie périphérique (18) du film (4) est soumise à un traitement de surface de sorte à modifier son aspect.

7. Procédé de réalisation d'un élément de garnissage selon l'une quelconque des revendications 1 à 6, ledit procédé comprenant les étapes suivantes :
- placer au moins un élément de décor (6) sur une paroi d'un outil de formage, la face externe dudit élément étant appliquée contre ladite paroi,
- appliquer la zone d'envers (16) du film (4) en matériau plastique sur la face interne de l'élément de décor (6) et la zone périphérique (18) contre la paroi de l'outil de formage de sorte que ladite zone (18) entoure au moins une partie de l'élément de décor (6) et s'étende dans au moins une ouverture (14) traversant l'élément de décor (6), ledit film étant fixé à l'élément de décor (6) lors de cette opération,
- former le substrat (2) sur la face interne du film en matériau plastique (4), sur la face dudit film opposée à la zone d'envers (16) et à la zone périphérique (18).

8. Procédé de réalisation selon la revendication 7, **caractérisé en ce que** au moins deux éléments de décor (6) sont placés sur la paroi de l'outil de formage espacés l'un de l'autre, le film étant appliqué sur les faces internes desdits deux éléments de décor (6) et la zone périphérique (18) dudit film étant appliqué contre ladite paroi au moins entre lesdits éléments de décor (6).

9. Procédé de réalisation selon la revendication 7 ou 8, **caractérisé en ce que** l'ensemble élément de décor (6) / film en matériau plastique (4) est placé dans un outil d'injection (28) après l'assemblage de l'élément de décor (6) et du film (4), le substrat (2) étant injecté sur ledit film (4) dans ledit outil d'injection (28).

## Patentansprüche

1. Fahrzeugverkleidungselement (1), umfassend mindestens ein Dekorationselement (6), das aus einem ersten Material hergestellt ist, das Dekorationselement (6) umfassend eine Außenseite, die einen Teil der sichtbaren Seite des Verkleidungselements (1) ausbildet, und eine Innenseite, wobei das Dekorationselement (6) auf einer Kunststoffmaterialfolie (4) angeordnet ist, die sich von dem ersten Material unterscheidet, die Folie (4) umfassend mindestens einen rückseitigen Bereich (16), der sich auf der Innenseite des Dekorationselements (6) erstreckt, wobei die Folie mindestens teilweise auf einem Substrat (2) angeordnet ist, die Folie (4) ferner umfassend mindestens einen Randbereich (18), der sich um mindestens einen Teil des Dekorationselements (6) herum erstreckt und einen anderen Teil der sichtbaren Seite des Verkleidungselements (1) ausbildet, **dadurch gekennzeichnet, dass** das Dekorationselement (6) mindestens eine Öffnung (14) durch das Element umfasst, wobei sich ein Randbereich (18) der Folie in die Öffnung (14) erstreckt und die sichtbare Seite des Verkleidungselements in der Öffnung (14) ausbildet.

2. Verkleidungselement nach Anspruch 1, **dadurch gekennzeichnet, dass** das Dekorationselement (6) durch einen Holzkomplex (8) ausgebildet ist, umfassend mindestens eine Holzmaterialschicht (10) und eine Verstärkungsschicht (12), wobei sich die Verstärkungsschicht (12) auf der Rückseite der Holzmaterialschicht (10) erstreckt und die Innenseite des Dekorationselements (6) ausbildet.

3. Verkleidungselement nach Anspruch 1 oder 2, **dadurch gekennzeichnet, dass** sich der Randbereich (18) der Folie (4) im Wesentlichen in der Fortsetzung der Außenseite des Dekorationselements (6) erstreckt.

4. Verkleidungselement nach einem der Ansprüche 1 bis 3, **dadurch gekennzeichnet, dass** der Randbereich (18) der Folie, der sich in die Öffnung (14) erstreckt, die Öffnung (14) verschließt oder nur die Kanten der Öffnung (14) bedeckt.

5. Verkleidungselement nach einem der Ansprüche 1 bis 4, **dadurch gekennzeichnet, dass** es mindestens zwei verschiedene, voneinander beabstandete Dekorationselemente (6), die Folie umfassend zwei rückseitige Bereiche (16), von denen sich jeder auf der Innenseite des einen der Dekorationselemente (6) erstreckt, und mindestens einen Randbereich (18) umfasst, der sich von einem Dekorationselement (6) zu dem anderen erstreckt und zwischen den Dekorationselementen (6) die sichtbare Seite des Verkleidungselements ausbildet.

6. Verkleidungselement nach einem der Ansprüche 1 bis 5, **dadurch gekennzeichnet, dass** mindestens der Randteil (18) der Folie (4) einer Oberflächenbehandlung unterzogen wird, um sein Aussehen zu verändern.

7. Verfahren zum Herstellen eines Verkleidungselements nach einem der Ansprüche 1 bis 6, das Verfahren umfassend die folgenden Schritte:
- Platzieren mindestens eines Dekorationselements (6) auf einer Wand eines Formwerkzeugs, wobei die Außenseite des Elements gegen die Wand aufgebracht wird,
- Aufbringen des rückseitigen Bereichs (16) der Kunststoffmaterialfolie (4) auf die Innenseite des Dekorationselements (6) und des Randbereichs (18) gegen die Wand des Formwerkzeugs, so dass der Bereich (18) mindestens einen Teil des Dekorationselements (6) umgibt und sich in mindestens eine Öffnung (14) durch das Dekorationselement (6) erstreckt, wobei die Folie während dieses Ablaufs an dem Dekorationselement (6) befestigt ist,
- Ausbilden des Substrats (2) auf der Innenseite der Kunststoffmaterialfolie (4), auf der Seite der Folie, die dem rückseitigen Bereich (16) und dem Randbereich (18) gegenüberliegt.

8. Herstellungsverfahren nach Anspruch 7, **dadurch gekennzeichnet, dass** mindestens zwei Dekorationselemente (6) auf der Wand des Formwerkzeugs voneinander beabstandet platziert sind, wobei die Folie auf die Innenseiten der zwei Dekorationselemente (6) aufgebracht wird und der Randbereich (18) der Folie mindestens zwischen den Dekorationselementen (6) gegen die Wand aufgebracht wird.

9. Herstellungsverfahren nach Anspruch 7 oder 8, **dadurch gekennzeichnet, dass** die Einheit Dekorationselement (6)/Kunststoffmaterialfolie (4) nach dem Zusammenfügen des Dekorationselements (6) und der Folie (4) in ein Spritzwerkzeug (28) platziert wird, wobei das Substrat (2) in dem Spritzwerkzeug (28) auf die Folie (4) gespritzt wird.

## Claims

1. Vehicle trim element (1) comprising at least one decorative element (6) made of a first material, said decorative element (6) comprising an outer surface which forms a portion of the visible surface of the trim element (1), and an inner surface, said decorative element (6) being arranged on a film made of plastics material (4), which is different from the first material, said film (4) comprising at least one rear region (16) which extends over the inner surface of the decorative element (6), said film being arranged at least partially on a substrate (2), the film (4) further comprising at least one peripheral region (18) which extends around at least one portion of the decorative element (6) and forms another portion of the visible surface of the trim element (1), **characterized in that** the decorative element (6) comprises at least one opening (14) which passes through said element, a peripheral region (18) of the film extending into said opening (14) and forming the visible surface of the trim element in said opening (14).

2. Trim element according to claim 1, **characterized in that** the decorative element (6) is formed by a ligneous complex (8), comprising at least one layer of ligneous material (10) and a reinforcement layer (12), said reinforcement layer (12) extending over the rear of the layer of ligneous material (10) and forming the inner surface of the decorative element (6).

3. Trim element according to either claim 1 or claim 2, **characterized in that** the peripheral region (18) of the film (4) extends substantially in continuity with the outer surface of the decorative element (6).

4. Trim element according to any of claims 1 to 3, **characterized in that** the peripheral region (18) of the film extending into the opening (14) closes off said opening (14) or covers only the edges of said opening (14).

5. Trim element according to any of claims 1 to 4, **characterized in that** it comprises at least two separate decorative elements (6) spaced apart from each other, the film comprising two rear regions (16) which each extend over the inner surface of one of the decorative elements (6), and at least one peripheral region (18) which extends from one decorative element (6) to the other and forms the visible surface of the trim element between said decorative elements (6).

6. Trim element according to any of claims 1 to 5, **characterized in that** at least the peripheral portion (18) of the film (4) is subjected to a surface treatment so as to modify its appearance.

7. Method for producing a trim element according to any of claims 1 to 6, said method comprising the following steps:
- placing at least one decorative element (6) on a wall of a forming tool, the outer surface of said element being applied against said wall,
- applying the rear region (16) of the film (4) made of plastics material to the inner surface of the decorative element (6) and applying the peripheral region (18) against the wall of the forming tool such that said region (18) surrounds at least one portion of the decorative element (6) and extends into at least one opening (14) passing through the decorative element (6), said film being fixed to the decorative element (6) during this operation,
- forming the substrate (2) on the inner surface of the film made of plastics material (4), on the surface of said film opposite the rear region (16) and the peripheral region (18).

8. Production method according to claim 7, **characterized in that** at least two decorative elements (6) are placed on the wall of the forming tool so as to be spaced apart from each other, the film being applied to the inner surfaces of said two decorative elements (6) and the peripheral region (18) of said film being applied against said wall at least between said decorative elements (6).

9. Production method according to either claim 7 or claim 8, **characterized in that** the assembly consisting of the decorative element (6) / film made of plastics material (4) is placed in an injection tool (28) after the decorative element (6) and film (4) have been joined, the substrate (2) being injected onto said film (4) in said injection tool (28).
